(19)

Europäisches Patentamt

European Patent Office

Office européen des brevets

(11) EP 0 996 005 A1

(12) EUROPEAN PATENT APPLICATION

(43) Date of publication:
26.04.2000 Bulletin 2000/17

(51) Int. Cl.$^7$: G02B 6/125

(21) Application number: 98203194.0

(22) Date of filing: 22.09.1998

(84) Designated Contracting States:
AT BE CH CY DE DK ES FI FR GB GR IE IT LI LU MC NL PT SE
Designated Extension States:
AL LT LV MK RO SI

(71) Applicant: Akzo Nobel N.V.
6824 BM Arnhem (NL)

(72) Inventor:
Bulthuis, Hendrik Freerk
7512DK Enschede (NL)

(74) Representative:
Schalkwijk, Pieter Cornelis et al
AKZO NOBEL N.V.
Patent Department (Dept. APTA)
P.O. Box 9300
6800 SB Arnhem (NL)

(54) **Improved power tap**

(57) The invention pertains to an optical waveguide structure comprising at least one optical main waveguide and at least one power tap for tapping of signal power carried in the guided mode of the optical main waveguide, wherein for tapping the optical main waveguide gradually widens over a length $L_{taper}$ to a width $W_{taper}$ and then gradually narrows to a finite width, thereby forming a tapered waveguide, and the power tap branches from the tapered waveguide. The tapered form of the waveguide allows only a fraction of the guided mode to be coupled into the power tap; hence the loss resulting from the power tap is kept to a minimum. Further, tapping is virtually wavelength-independent and the manufacturing tolerance is good.

Fig. 1

EP 0 996 005 A1

## Description

The invention pertains to an optical waveguide structure, such as a switch or a Mach-Zehnder Interferometer (MZI), which comprises at least one optical main waveguide and at least one power tap.

Due to the increasing use of optical fibre communication channels, the development of optical devices for direct processing of optical signals has become of significant importance to system designers. One particularly useful approach to optical processing is through the use of integrated waveguide structures formed on, e.g., silicon substrates. The basic structure of such devices is known to those skilled in the art. Depending on the precise configuration of the waveguide, such devices can perform a wide variety of functions including tapping signal power from the optical waveguide. In a typical tapping application of integrated optical devices, two waveguides pass in close adjacency for a certain length, i.e., coupler length, dependent upon the desired degree of coupling. Energy from one waveguide core is transferred to an adjacent core to effectuate the signal tap. One shortcoming of such optical tap configurations is that the tapped signal tends to be dependent upon the wavelength and on polarization of the signal due to interferometric and/or multi mode effects.

U.S. Patent 5,539,850 describes an optical device for tapping signal power wherein the signal tap provided is substantially independent of wavelength and polarization. This is achieved by two tap means each selected to compensate for the other's wavelength and polarization dependencies. The disclosed structure thus renders tapping wavelength independent by comprising two taps.

Another approach to tapping of an optical signal is described in U.S. Patent 4,076,375, which discloses an optical waveguide coupler and power tap for use with optical fibres or planar-form optical waveguides. Abutted to the end of the cladded optical transmission waveguide is a section of a second optical waveguide comprising a core surrounded by a cladding layer, the said core having a smaller cross-sectional area than the core of the transmission waveguide. By this arrangement, a significant amount of the core guided modes in the direction of the transmission waveguide is coupled into the cladding layer of said second waveguide at the abutting point for tapping.

The present invention seeks to provide a tolerant optical waveguide structure for tapping the power carried by the main optical waveguide mode that, on the one hand, shows only a low power loss while tapping and little wavelength dependence and, on the other hand, has a comparatively simple arrangement. This is achieved by employing an optical waveguide structure as described in the first paragraph wherein the optical main waveguide gradually widens over a length $L_{taper}$ to a width $W_{taper}$ and then gradually narrows to a finite width, thereby forming a tapered waveguide, and the power tap branches from the tapered waveguide.

Due to the tapered form of the main waveguide provided by the present invention, the guided mode is forced to gradually widen up to the broad end of the taper and then to gradually narrow again. By tapping at or near this broad end of the taper using a power tap exhibiting, e.g., a cross-sectional area comparable to that of the main waveguide before widening or even smaller, only a fraction of the guided mode will be coupled into this power tap. This fraction depends on the overlap of the widened mode with the tap waveguide. The arrangement provided by the present invention thus allows purely geometrical properties control the tapped power, which can therefore easily be kept low.

It is preferred that the optical main waveguide gradually narrows substantially to its original width.

It is also preferred that the power tap branches at or near $W_{taper}$

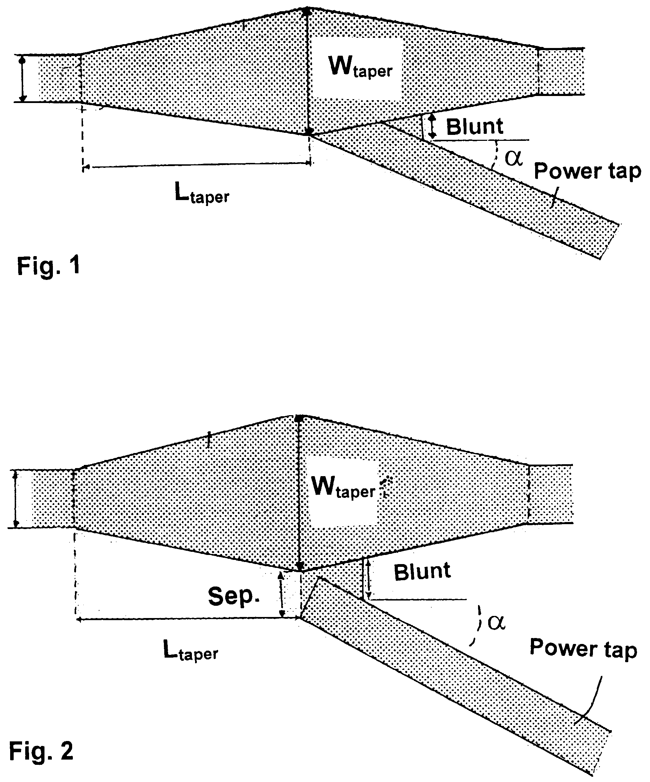

Referring to Fig. 1, shown is a schematic drawing of an optical waveguide structure according to the present invention. It can be seen that the main waveguide gradually widens from its original width over the taper length $L_{taper}$ to the width $W_{taper}$, the broad end of the taper, and then gradually narrows again. The power tap is positioned near the broad end of the taper.

It is preferred that the $W_{taper}$ is greater than about two times of the original width of the main waveguide.

It should be borne in mind that the terms "tapered waveguide" and "taper" as used for the description of the main waveguide generally encompasses geometric forms that gradually widen and narrow again, i.e. in a non-straight way, such as parabolic shapes, without the scope of the present invention being exceeded. The form of the optical waveguide structure as shown in Fig. 1 thus is only one example of a tapered form.

A further advantage of the invention is that due to the fact that the fraction of the guided mode that is coupled into the power tap depends on geometrical properties and not on interference and/or multi mode effects, the tapping will become virtually wavelength independent.

The optical waveguide structure according to the present invention has a simple structure and can easily be manufactured by those skilled in the art. Furthermore, since tapping is done at or near the broad end of the taper, i.e. in a rather insensitive location, the waveguide structure shows a good manufacturing tolerance with regard to geometry and refraction index variations.

Preferred in the present invention are planar optical waveguides.

It is noted that JP 56140305 A discloses an optical branching and coupling circuit with an optical mixing waveguide in a tapered shape. The broadening of the waveguide in JP 56140305 A results in less insertion loss and minimizes uneven distribution. The fibre bundles that take up the light, however, are connected to the narrow ends of the mixing waveguides. Furthermore, JP 56140305 does not disclose a power tap.

It should be clear from the aforementioned that also the power tap itself will usually be an optical waveguide. As tapping is mainly dependent on the geometrical properties of the waveguide structure that comprises the tapered waveguide and the power tap, the manufacture of the tapered waveguide and the waveguide for the power tap can be performed in a similar way with respect to the manufacturing steps and the employed materials, provided the necessary geometrical arrangement is achieved.

The manufacture of optical waveguides is known in itself. Such waveguides are used in optical devices, which are commonly optical fibre-compatible. It is preferred that the tapered waveguide and the power tap consist essentially of embedded or embedded ridge-type channel waveguides which comprise a high refractive index core component embedded in a lower refractive index cladding component. The index contrast $\Delta n$ between the high refractive index core and the lower refractive index cladding required to keep the propagating mode in the core of the waveguide is usually between 0.001 and 0.01.

The cladding component may be glass or a polymeric material. The core component, which comprises the actual waveguide design, may be made of inorganic or polymeric material.

Within the framework of the present invention, cladding and core components of polymeric materials are preferred. The polymers used for these components are so-called optical polymers. The refractive index of the optical polymers used will generally be within the range of from 1.4 to 1.8.

Optical polymers are known, and the person of ordinary skill in the art will be able to choose polymers having the appropriate refractive indices, or to adapt the refractive indices of polymers by chemical modification, e.g., by introducing monomeric units that affect the refractive index.

Suitable materials for and configurations of the cladding and core components are disclosed, int. al., in M.B.J. Diemeer et al., "Polymeric phased array wavelength multiplexer operating around 1550 nm," *Electronics Letters,* Vol. 32 (1996), pp. 1132-1133; and T.A. Tumolillo et al., "Solid State Optical Space Switches for Network Cross-Connect and Protection Applications," *IEEE Communications Magazine* (1997), pages 124-130; and International Patent Application WO 97/01782.

Underneath the core and cladding components there usually is a support, e.g., a glass or silicon substrate, which latter is preferred.

It is preferred that the thickness of the optical waveguide does not change in the course of gradual narrowing or widening.

The geometrical arrangements of the optical waveguide structure for an index contrast $\Delta n$ between core and cladding of smaller than 0.01 are described hereinafter.

In a preferred embodiment, the taper length $L_{taper}$ as measured from the onset of widening to the broad end of the taper is greater than 0.1 mm and smaller than 10 mm, preferably between 4 mm and 8 mm.

In yet another preferred embodiment the broad end of the taper has a width $W_{taper}$ of greater than 1 μm and smaller than 100 μm, preferably between 10 μm and 30 μm.

The preferred dimensions of the taper allow sufficient widening of the propagating mode at or near the point of tapping and thus lead to the desired low power loss and wavelength independence.

It is a particular advantage of the present invention that the tapped fraction can be determined by adjusting the power tap relative to the tapered waveguide. This adjustment can be described by a tap angle $\alpha$ that is defined as the angle between the center line of the tapered waveguide and the center line of the power tap.

Referring to Fig. 1, there is also shown an example for the tap angle $\alpha$.

In a preferred embodiment of the present invention the tap angle $\alpha$ is greater than 0.1 degrees and smaller than 10 degrees, preferably between 1 and 5 degrees. By varying the tap angle $\alpha$ while designing the waveguide structure, it is possible to set the power transferred during tapping.

Also referring to Fig. 1, it is shown that a blunt can be introduced between the tapered waveguide and the branching power tap. The blunt may be regarded as an additional design parameter. By varying the blunt size it is also possible to optimize, e.g., the excess loss and the power transferred during tapping. The blunt size as measured along the broad end of the blunt between the tapered waveguide and the branching power tap is greater than 0.1 μm and smaller than 10 μm, preferably between 0.5 μm and 2 μm.

In yet another preferred embodiment of the present invention the space between the tapered waveguide and the power tap is bridged. Like a blunt, this bridge, also an extra design parameter, serves to improve the isolation between the main waveguide and the power tap. Without this separating space there is still a direct connection between the main waveguide and the branching power tap. Referring to Fig. 2, it is shown that the separating space (Sep.) between the afore-mentioned two components enhances the isolation, which will further reduce the power loss.

Of course this invention also pertains to active optical components, such as 1xN switches, switch matrices, and Mach-Zehnder-Interferometers, so-called thermo-optical (TO) components, or electro-optical components (EO) that comprise an optical waveguide structure according to the invention. Both thermo-optical and electro-optical components are known.

The working of thermo-optical components is based on the phenomenon of the optical waveguide material employed exhibiting a temperature dependent refractive index. On top of the upper cladding layer heating elements are provided (usually metal strips) to heat the polymeric cladding and core materials, in order to change the refractive index for switching.

The working of electro-optical devices is based on the phenomenon of the non-linear optically active material employed exhibiting an electric field dependent refractive index. On top of the upper cladding layer electrodes are provided to apply an electric field to the non-linear optically active material to change the refractive index for switching.

Of course, the invention also applies to passive optical components, like splitters, (de)multiplexers, and combiners, that comprise an optical waveguide structure according to the invention.

Active and passive optical components or devices can be used in optical communications networks of various kinds. Generally, the optical components either will be directly combined with optical components such as light sources (laser diodes) or detectors, or they will be coupled to input and output optical fibres, usually glass fibres.

The invention will now be illustrated by way of the following unlimitative examples.

Example 1

A waveguide structure according to the present invention comprising a power tap and a tapered waveguide was manufactured showing the following dimensions:

| | |
|---|---|
| main waveguide width | = 6 $\mu$m |
| power tap width | = 6 $\mu$m |
| $L_{taper}$ | = 6.0 mm |
| $W_{taper}$ | = 16.0 $\mu$m |
| tap angle $\alpha$ | = 2.25 degrees |
| blunt size | = 0.8 $\mu$m |
| refractive index contrast ($\Delta$n) | = 0.006 |

This waveguide structure showed at a wavelength of 1538 nm a tap ratio, which is the percentage ratio of the power in the tap (power tap) to the power in the main waveguide (power main), of 4.5 %.

[tap ratio (%) = power tap/power main].

Example 2

A waveguide structure was manufactured according to Example 1, except that now the tap angle $\alpha$ was varied from 3.5 to 1.0. Table 1 shows the results with respect to the tap ratio.

Table 1

| tap angle $\alpha$ (degrees) | tap ratio (%) (= power tap/power main x100) |
|---|---|
| 3.5 | 2.0 |
| 2.25 | 4.5 |
| 1.5 | 7.3 |
| 1.0 | 16.9 |

It can be seen from the results of Table 1 that increasing the tap angle $\alpha$ can reduce the tap ratio at a wavelength of 1538 nm.

Example 3

A waveguide structure was manufactured according to Example 1, except that now the wavelength was varied. Table 2 shows the results with respect to the tap ratio.

Table 2

| wavelength (nm) | tap ratio (%) (= power tap/power main x100) |
|---|---|
| 1535 | 4.5 |
| 1545 | 4.6 |
| 1555 | 4.6 |
| 1560 | 4.7 |

It can be seen from the results of table 2 that the tap ratio remains rather constant when varying the wavelength, showing that tapping of power in the waveguide structure of the present invention is virtually wavelength independent.

**Claims**

1. An optical waveguide structure comprising at least one optical main waveguide and at least one power tap, characterized in that for tapping the optical main waveguide gradually widens over a length $L_{taper}$ to a width $W_{taper}$ and then gradually narrows to a finite width, thereby forming a tapered waveguide, and the power tap branches from the tapered waveguide.

2. The optical waveguide of claim 1 wherein the optical main waveguide gradually narrows substantially to its original width.

3.  The optical waveguide of claim 1 or 2 wherein the power tap branches at or near $W_{taper}$.

4.  The optical waveguide structure of any one of the preceding claims wherein the main waveguide and the power tap consist essentially of embedded or embedded ridge-type channel waveguides which comprise a high refractive index core component embedded in a lower refractive index cladding component.

5.  The optical waveguide structure of claim 4 wherein the core and cladding components are made of polymeric materials.

6.  The optical waveguide structure of any one of the preceding claims wherein $L_{taper}$ is greater than 0.1 mm and smaller than 10 mm.

7.  The optical waveguide structure of any one of the preceding claims wherein $W_{taper}$ is greater than 1 μm and smaller than 100 μm.

8.  The optical waveguide structure of any one of the preceding claims wherein the tap angle a between the center line of the tapered waveguide and the center line of the power tap is greater than 0.1 degrees and smaller than 10 degrees.

9.  The optical waveguide structure of any one of the preceding claims wherein a blunt is introduced between the tapered waveguide and the branching power tap and the blunt size as measured along the broad end of the blunt between the tapered waveguide and the branching power tap is greater than 0.1 μm and smaller than 10 μm.

10. An optical component comprising the optical waveguide structure of any one of claims 1-9.

**Fig. 1**

**Fig. 2**

**European Patent Office**

## EUROPEAN SEARCH REPORT

Application Number

EP 98 20 3194

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 737 474 A (AOKI MASAHIRO ET AL) 7 April 1998 * abstract; figure 8 * * column 9, line 25 - line 57 * | 1-10 | G02B6/125 |
| A | EP 0 816 908 A (NORTHERN TELECOM LTD) 7 January 1998 * abstract; figures 1,3,7 * * column 4, line 36 - column 5, line 7 * | 1-10 | |
| A | EP 0 831 344 A (SIEMENS AG) 25 March 1998 * abstract; figure 1 * * column 2, line 1 - line 21 * | 1-10 | |
| A | EP 0 651 268 A (SUMITOMO ELECTRIC INDUSTRIES) 3 May 1995 * abstract; figures 1,3,9 * | 1-10 | |

TECHNICAL FIELDS SEARCHED (Int.Cl.6)

G02B

The present search report has been drawn up for all claims

| Place of search | Date of completion of the search | Examiner |
|---|---|---|
| THE HAGUE | 22 February 1999 | Jakober, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 0 996 005 A1**

## ANNEX TO THE EUROPEAN SEARCH REPORT
## ON EUROPEAN PATENT APPLICATION NO.

EP 98 20 3194

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-1999

| Patent document cited in search report | | Publication date | Patent family member(s) | | Publication date |
|---|---|---|---|---|---|
| US 5737474 | A | 07-04-1998 | JP | 8116124 A | 07-05-1996 |
| EP 0816908 | A | 07-01-1998 | US | 5799119 A | 25-08-1998 |
| | | | CA | 2209455 A | 03-01-1998 |
| | | | JP | 10073792 A | 17-03-1998 |
| EP 0831344 | A | 25-03-1998 | NONE | | |
| EP 0651268 | A | 03-05-1995 | CA | 2134693 A | 02-05-1995 |
| | | | CA | 2134694 A | 02-05-1995 |
| | | | DE | 69415768 D | 18-02-1999 |
| | | | EP | 0651267 A | 03-05-1995 |
| | | | JP | 7174929 A | 14-07-1995 |
| | | | JP | 7191226 A | 28-07-1995 |
| | | | US | 5627928 A | 06-05-1997 |
| | | | US | 5586209 A | 17-12-1996 |